# NEW EUROPEAN PATENT SPECIFICATION

(11) **EP 1 031 410 B2**
(45) Date of publication and mention of the opposition decision: **21.10.2009**
(45) Mention of the grant of the patent: 28.01.2004
(21) Application number: 00103664.9
(22) Date of filing: 22.02.2000
(51) Int. Cl.: B32B 27/32, C08L 23/02

(54) **Printable polyolefin film**
Bedruckbare Polyolefin-Mehrschichtfolie
Feuille multicouche de polyoléfine imprimable

(30) Priority: 25.02.1999 JP 4733599
(43) Date of publication of application: 30.08.2000
(73) Proprietor: Toyo Boseki Kabushiki Kaisha, Osaka-shi, Osaka 530-8230 (JP)
(72) Inventor: Taga, Atsushi, Inuyama Factory Toyo Boseki K.K., Inuyama-shi, Aichi-ken (JP); Nakaya, Tadashi, Inuyama Factory Toyo Boseki K.K., Inuyama-shi, Aichi-ken (JP); Kitaura, Ichiro, Inuyama Factory Toyo Boseki K.K., Inuyama-shi, Aichi-ken (JP); Oko, Tsutomu, Toyobo Packaging Planning Serv. Inc., Osaka-shi, Osaka-fu (JP)
(74) Representative: Weber, Thomas

(56) References cited:
- EP-A- 0 356 220
- EP-A- 0 517 109
- EP-A- 0 594 918
- EP-A- 0 789 281
- WO- -00//09596
- WO-A-96/23659
- US-A- 4 397 916
- US-A- 5 434 217
- US-A- 5 441 802
- US-A- 5 491 023
- US-A- 5 637 410
- US-A- 5 693 387
- DATABASE WPI Section Ch, Week 199424 Derwent Publications Ltd., London, GB; Class A17, AN 1994-197364 XP002140819 & JP 06 136330 A (MITSUBISHI PETROCHEMICAL CO LTD), 17 May 1994 (1994-05-17)

## Description

The present invention relates to a polyolefin film excellent in printability, and more particularly to a polyolefin film showing superior printability when printed with a ultraviolet-curing ink (hereinafter referred to as "UV ink").

It has been pointed out that polyolefin films exhibit a low UV ink adhesion when printed or laminated because the materials for polyolefin films are non-polar.

Due to the defect as suggested above, polyolefin films pose the following problems. For example, when an adhesive tape is peeled from an adhesive tape-sealed packaging material comprising a printed polyolefin film, a UV ink, owing to a UV ink low adhesion, is partly transferred to the adhesive tape, and the print partly comes off. Further, when a printed polyolefin film is used as a label or a seal, the polyolefin film may be separated from mold release paper, or a seal may be separated from the polyolefin film. If such separation is repeated, the UV ink may be removed from the polyolefin film.

When a polyolefin film is printed with a UV ink, an insufficient amount of UV ink is transferred to the polyolef in film because of low UV ink adhesion to the film, resulting in failure to give a good print. The term "color-forming property" is used herein to mean a property of causing the transfer of increased amount of UV ink to the polyolefin film to give a good print.

Currently there is a demand for the development of a polyolefin film improved in printability, especially in UV ink adhesion and color-forming property.

To develop a polyolefin film improved in printability, especially in UV ink adhesion and color-forming property, the following methods have been proposed: (1) a method wherein the surface of polyolefin film is subjected to corona discharge treatment or flame treatment to introduce polar groups into the film surface; (2) a method wherein the surface of polyolefin film is roughened with inorganic or organic fine particles; and (3) a method wherein voids are formed in a polyolefin film.

However, these methods were not successful in producing polyolefin films enhanced in printability, especially in UV ink adhesion and color-forming property.

The the method (1) involving corona discharge or flame treatment to apply polar groups to the film surface is defective in that a polyolefin film is improved only in a limited surface portion and the UV ink adhesion is not enhanced to an extent suitable for use.

The method (2) comprising roughening the surface of polyolefin film is unsatisfactory in that the UV ink adhesion and the color-forming property can be improved to some extent but not to a satisfactory extent. Further, the method (2) inevitably fails to deposit a UV ink over the projection of surface due to the presence of coarse particles or agglomerates among inorganic or organic fine particles used for roughening the film surface (hereinafter called "ink-off printing failure").

The method (3) comprising voiding a polyolefin film entails an ink-off printing failure induced by the projection of coarse particles as in the method (2). Then, the ink ingresses into voids so that a color fails to come out well in the print. Furthermore, an increased amount of ink is used to make up for such failure, raising a problem of higher costs. In addition, the method (3) can not fully improve the color-forming property.

An object of the present invention is to provide a polyolefin film excellent in printability.

Another object of the invention is to provide a polyolefin film superior in ink adhesion, particularly in UV ink adhesion.

A further object of the invention is to provide a polyolefin film excellent in color-forming property.

A still further object of the invention is to provide a polyolefin film free from the problem of ink off printing failure.

An additional object of the invention is to provide a polyolefin film which is excellent in UV ink adhesion or printing ink adhesion, free from the problem of ink-off printing failure and superior in color-forming property.

According to the present invention, there is provided a polyolefin film as defined in claim 1. A preferred embodiment is apparent from claim 2.

Other features of the present invention will become apparent from the following description.

The copolymer to be used in the invention may further have a functional group other than the carboxyl group, introduced therein using ethyl acrylate, methyl acrylate, ethyl methacrylate, methyl methacrylate or like alkyl ester of acrylic acid or alkyl ester of methacrylic acid. The functional group other than the carboxyl group may be easily introduced into the polyolefin by conventional methods.

The surface layer (B) of the polyolefin film according to the present invention is formed from the copolymer resin or a resin mixture of the copolymer resin and the polypropylene resin. The resin mixture preferably contains the copolymer resin in an amount of 5% by weight or more based on the total amount of the resins of the surface layer (B). The surface layer (B) contains preferably 95% by weight or less of the polypropylene resin constituting the base layer (A). When the resin mixture in the surface layer (B) contains 5% by weight or more of the copolymer resin, the UV ink adhesion to the surface layer (B) is enhanced.

According to the present invention, the polypropylene film is such that the surface layer (B) is laminated on one or both of surfaces of the base layer (A).

From the viewpoint of economy, a preferred polypropylene film in the present invention is such that the surface layer (B) is laminated on one surface of the base layer (A).

A more preferred polypropylene film in the present invention is such that the surface layer (B) is formed from the copolymer resin or a resin mixture of 5% by weight or more of the copolymer resin and 95% by weight or less of the polypropylene resin, the surface layer (B) being laminated at least on one surface of the base layer (A).

According to the present invention, the base layer (A) has voids.

The voided base layer (A) is prepared by forming voids in the base layer (A). The voids can be formed by conventional methods widely used in the art.

Useful methods include, for example, (i) a method comprising mixing the polypropylene resin constituting the base layer (A) with a resin or inorganic or organic fine particles which are non-compatible with the polypropylene resin to form a film, and stretching the obtained film to form microvoids in the interface between the polypropylene resin and the non-compatible resin or inorganic or organic fine particles, and (ii) a method comprising adding a foaming agent to the polypropylene resin constituting the base layer (A), and generating a gas in an extruder by heating to produce foams in the film. The method (i), particularly the method (i) using the polypropylene resin and inorganic or organic fine particles is preferable in the present invention from the viewpoint of easiness of controlling the content and size of voids.

Inorganic fine particles to be used in the method (i) include, for example, calcium carbonate, silicon dioxide, barium sulfate, magnesium oxide, alumina, zeolite, talc, mica and titanium dioxide. Organic fine particles to be used in the method (i) include, for example, polycarbonate, polybutylene terephthalate, crosslinked polyurethane and like polymers.

Inorganic or organic fine particles coated with various materials can be used in the present invention insofar as they are capable of forming voids in the film.

Preferred particle size of inorganic or organic fine particles is variable with the thickness of the film and is indeterminable. It is preferred, however, to use inorganic or organic fine particles with a number average particle size of about 0.5 to about 12 µm. Their more preferred number-average particle size is about 0.8 to about 5 µm from the viewpoints of foaming efficiency and ink-off printing failure due to coarse particles.

The shape of inorganic or organic fine particles is not limited insofar as the separation of interface occurs in the film by stretching the film to form voids. The fine particles may be, for example, spherical, cubic, pillared, conical, discoidal or amorphous, or may be porous.

The polypropylene film of this invention is prepared by stretching the film at least to one direction. In other words, the polypropylene film of the invention may be one prepared by any of monoaxial stretching and biaxial stretching insofar as the film is stretched to one direction .

The polypropylene films of the present invention are those wherein the laminated polypropylene film has a light transmission of 40% or less, and the base layer (A) has a void content of 0.2 cc/100 g to 30 cc/100 g. Such polypropylene f ilms can increase the reflectance of the film and can further improve the color-forming property.

It is desirable that the polypropylene films of the invention be those in which the polypropylene film shows a light transmission of 30% or less and the base layer (A) has a void content of 0.2 cc/100 g to 30 cc/100 g.

It is desirable that the polypropylene films of the invention be those in which the polypropylene film shows a light transmission of 40% or less and the base layer (A) has a void content of 0.2 cc/100 g to 20 cc/100 gs.

It is more desirable that the polypropylene films of the invention be those in which the polypropylene film shows a light transmission of 30% or less and the base layer (A) has a void content of 0.2 cc/100 g to 20 cc/100 g.

The polypropylene films having a light transmission of 40% or less can be easily prepared by forming voids in the base layer (A). The size and content of voids are variable depending on the amount, kind, shape and particle size of inorganic or organic fine particles used for forming voids in the base layer (A), on the kind of the polypropylene resin constituting the base layer (A), on the temperature for formation of voids and on stretching conditions such as a draw ratio so that a light transmission is varied. The light transmission of the polypropylene film according to the invention can be adjusted to 40% or less by incorporating into the base layer (A) inorganic fine particles capable of giving the layer a hiding property (the property of hiding it from light).

The light transmission of the polypropylene film according to the invention can be adjusted to 40% or less by incorporating into the surface layer (B) inorganic fine particles capable of imparting a hiding property to the layer.

Conventional inorganic fine particles can be widely used as such particles, regardless of kinds, insofar as they have a size and properties which substantially do not form voids in the film by stretching. Examples of such inorganic fine particles are those of titanium dioxide, barium sulfate, magnesium oxide or the like. Among them, especially preferred is titanium dioxide which has a high refractive index and shows a high hiding property.

The crystalline structure of titanium dioxide can be any of rutile and anatase. The titanium dioxide to be used may be subjected to various surface treatments by methods to enhance the light resistance and to adjust the color. Titanium dioxide about 0.2 to about 0.3 µm in number average particle size is preferred in that it can achieve a high hiding effect and is substantially not foamable.

When required, the base layer (A) and/or the surface layer (B) in the polypropylene film of the invention may contain additives within the range which would not adversely affect the objects of the invention. Useful additives include, for example, those for enhancing the properties such as slidability and antistatic properties, e.g. waxes, metallic soaps or like lubricants for improving the productivity, plasticizers and processing aids, and additives conventionally incorporated into polyolefin films such as heat stabilizers, antioxidants, antistatic agents, UV absorbers and so on.

In preparing the polypropylene film, there is no limitation on methods of mixing the polypropylene resin, the copolymer resin, inorganic or organic fine particles, additives and the like. Conventional methods can be widely used for this purpose. For example, generally the foregoing components are uniformly mixed by a mixing machine such as a twin-cylinder mixer, screw mixer, dry blender, ribbon blender or Henschel mixer. Thereafter the mixture is kneaded and pelletized.

Using the pellets thus obtained, the polypropylene film of the present invention can be prepared by methods described below (methods (a) and (b)).
(a) Using two extruders, a resin composition for forming the base layer (A) is placed into one extruder for melt extrusion, and a resin composition for forming the surface layer (B) is placed into the other extruder for melt extrusion. The two films were superposed on each other within or outside the die to give a laminated film, and the laminated film is stretched.
(b) A film is molded by extrusion molding to form the base layer (A), optionally followed by monoaxial stretching. A resin composition for forming the surface layer (B) is extruded and laminated on one or both of surfaces of the base layer (A), followed by stretching.

Although the overall thickness of the polypropylene film according to the present invention is variable depending on the purpose and the method of use and is indeterminable, its overall thickness is preferably about 10 to about 250 µm. While the thickness of the surface layer (B) can be determined as desired within the range of overall thickness of the film, its thickness is preferably about 0.5 to about 10 µm to assure the adhesion of UV ink to the film.

In preparing the polypropylene film of the present invention, extrusion molding and stretching are conducted in consideration of the properties of the polypropylene film to be formed, and further at a temperature and at a draw ratio at which the desired content of voids can be attained. For example, a film is formed by extrusion molding under the conventional film-forming conditions for polypropylene films, e.g. at an extrusion temperature of about 150 to about 300°C. Then the film is solidified with cooling rolls maintained at about 10 to about 100°C and is stretched.

In the stretching process, the film can be stretched to about 8 to about 50 times, preferably about 10 to about 40 times, in terms of area ratio. The film may be either monoaxially or biaxially stretched. The biaxial stretching can be conducted by simultaneous biaxial stretching method, sequential biaxial stretching method, inf lation method or the like, generally by sequential biaxial stretching method.

Sequential biaxial stretching is conducted as follows. Rolls operating at different circumferential speeds are heated to 100 to 150°C. The film is stretched longitudinally to about 3 to about 8 times by passing between the rolls. Then the film is stretched transversely to about 4 to about 10 times by a tenter at about 140 to about 170°C.

After the above-mentioned stretching, for example, the film is thermally immobilized at about 150 to about 170°C and is wound to provide the polyolefin film of the present invention.

The polypropylene film of the present invention prepared above may be subjected to conventional surface treatment to further improve the ink adhesion such as corona discharge treatment, plasma treatment, UV irradiation treatment, flame treatment or the like without entailing any disadvantage in the present invention. The polypropylene films of the present invention include the thus-treated polypropylene films. These surface treatments may be carried out in the film-forming process, i.e. in the in-line process, or may be conducted as a posttreatment after the formation of the film, i.e. in the so-called off-line process.

The polypropylene films of the present invention are superior in ink adhesion, especially UV ink adhesion and in color-forming property and free from the ink-off printing failure .

Consequently the polypropylene films of the present invention can be suitably used in the fields of labels, seals and the like.

The present invention will be described below in detail with reference to the following Examples to which the invention, however, is not limited at all. The property values were determined by the following methods.

### (1) Light transmission

As determined according to JIS-K-6714

### (2) Extent of interlaminar separation

The extent of interlaminar separation was evaluated using an adhesive cellophane tape (Trade name: "CELLOTAPE 252", product of SEKISUI CHEMICAL CO., LTD., 12 mm in width, hereinafter referred to as "adhesive tape A").

The adhesive surface of adhesive tape A (3 cm in length) was superposed on the surface layer (B) of the polypropylene film, and was pressed with fingers to firmly bond them. One end of the film was fixed by fingers, and the adhesive tape A was peeled from one direction at a velocity of 2 cm/sec at an angle of 90 degrees. The amount of the surface layer (B) separated from the film and transferred to the adhesive tape A was visually rated as follows.
A: None of surface layer (B) was transferred to adhesive tape A.
B: A part of the surface layer (B) was separated thinly in the thickness direction, and was transferred and bonded to the adhesive tape A.
C: The entire top face of surface layer (B) was separated thinly in the thickness direction, and was transferred and bonded to the adhesive tape A.
D: The entire top face of surface layer (B) was separated thickly in the thickness direction, and was transferred and bonded to the adhesive tape A.

### (3) Content of voids

The content of voids in the base layer (A) was given by calculation from the apparent density of the base layer (A) and the theoretical density thereof (the latter being calculated from the amounts of the components constituting the base layer (A) and the densities of the components).

### (4) Printability

The face of the surface layer (B) in the polypropylene film was printed with a UV ink (trade name "BESTCURE" 161 BLACK, product of T & K TOKA CO., LTD.) in an amount of 0.2 g/m² by an RI tester, RI-2 Model (trade name, product of AKIRA MFG CO., LTD.). The print was irradiated with UV rays (500 mj/m²) using a UV irradiator to cure the ink. The color-forming property and ink adhesion to the film were evaluated by the following methods.

### (a) Color-forming property

The color-forming property of the print was visually evaluated according to the following criteria.
A: A color is satisfactorily developed.
B: The color is acceptable for use.
C: The color is pale and unacceptable.

### (b) Ink adhesion

The foregoing print was cut crosswise to give slits extending in parallel longitudinally and transversely with spacing of 2 mm (25 squares). Then, using a cellophane adhesive tape (product of NICHIBAN CO., LTD., 18 mm width, hereinafter referred to as "adhesive tape B"), the ink adhesion was evaluated.

The adhesive surface of adhesive tape B (3 cm in length) was superposed on the printed surface of the film and was firmly bonded to the entire surface by pressing the film with a fingernail. One end of the film was fixed by fingers and then the adhesive tape B was peeled from one direction at a velocity of 2 cm/sec at an angle of 90 degrees. The amount of surface layer (B) separated from the film and bonded to the adhesive tape B was visually evaluated.
A: No ink was transferred to the adhesive tape B.
B: Four or less inked pieces were transferred to the adhesive tape B.
C: Five to nine inked pieces were transferred to the adhesive tape B.
D: Ten or more inked pieces were transferred to the adhesive tape B.

### Example 1

In one of two extruders for forming a polypropylene film, 100 parts by weight of polypropylene (trade name "NOBLEN FS 2011 D", product of SUMITOMO CHEMICAL CO., LTD.) was subjected to melt extrusion to form the base layer (A). In the other extruder, a mixture of 70% by weight of polypropylene and 30% by weight of maleic acid-modified polypropylene (trade name "ADMER-QF551, product of MITSUI CHEMICALS INC., LTD.) was subjected to melt extrusion to form the surface layer (B). In the dice, the two films were laminated on each other to provide a film with the two layers formed at a thickness ratio of (B)/(A)=3/67 µm. After cooling, the laminated film was biaxially stretched. The face of surface layer (B) was subjected to corona discharge treatment (electric power 2000 J/m²). Thereafter the obtained film was wound to provide a polyolefin film of 70 pm in thickness.

### Example 2

A polypropylene film was formed by conducting the same procedure as in Example 1 with the exception of using a mixture of 90% by weight of polypropylene (trade name "NOBLEN FS 2011 D", product of SUMITOMO CHEMICAL CO., LTD.) and 10% by weight of calcium carbonate having an average particle size of 2.6 pm in place of the resin for the base resin (A).

### Example 3

A polypropylene film was formed by performing the same procedure as in Example 1 with the exception of using a mixture of 90% by weight of polypropylene (trade name "NOBLEN FS 2011 D", product of SUMITOMO CHEMICAL CO., LTD.) and 10% by weight of titanium dioxide having an average particle size of 0.25 µm in place of the resin for the base resin (A) and using a mixture of 45% by weight of polypropylene (trade name "NOBLEN FS 2011 D", product of SUMITOMO CHEMICAL CO., LTD.) and 55% by weight of maleic acid-modified polypropylene (trade name "ADMER-QF551, product of MITSUI CHEMICALS INC., LTD.) in place of the resin for the surface layer (B).

The property values of the obtained films are shown in Table 1.

**Table 1**

| | Ex. 1 ^{*)} | Ex. 2 | Ex. 3 |
|---|---|---|---|
| Film structure | | | |
| Overall thickness(µm) | 70 | 70 | 70 |

| Base layer (A) | | | |
|---|---|---|---|
| Thickness (µm) | 67 | 67 | 67 |

| Composition | | | |
|---|---|---|---|
| Polypropylene (wt%) | 100 | 90 | 90 |
| Calcium carbonate(wt%) | - | 10 | - |
| Titanium dioxide (wt%) | - | - | 10 |

| Surface layer (B) | | | |
|---|---|---|---|
| Thickness (µm) | 3 | 3 | 3 |

| Composition | | | |
|---|---|---|---|
| Polypropylene (wt%) | 70 | 70 | 45 |
| Maleic acid-modified | | | |
| Polypropylene (wt%) | 30 | 30 | 55 |

| Film property | | | |
|---|---|---|---|
| Light transmission (%) | - | 28 | 25 |

| Base layer (A) | | | |
|---|---|---|---|
| Void content (cc/100 g) | - | 26 | 0.2 |

| Surface layer (B) | | | |
|---|---|---|---|
| UV ink adhesion | B | B | A |
| Color-forming property | B | A | A |
| Interlaminar separation | B | B | A |

| | | | |
|---|---|---|---|
| ^{*)} Comparative, not according to the invention | | | |

The film prepared in Example 1 was good in UV ink adhesion and color-forming property. The film prepared in Example 2 was superior in color-forming property to that of Example 1. The film prepared in Example 3 was superior to that of Example 1 in UV ink adhesion and color-forming property and also in property of interlaminar separation.

## Claims

1. A polypropylene film having a light transmission (JIS-K-6714) of 40 % or less, and having a base layer (A) and a surface layer (B) laminated on at least one surface of the base layer (A), wherein
the base layer (A) comprises a polypropylene resin and has voids in a void content of 0.2 cm³/100 g to 30 cm³/100 g
the surface layer (B) comprises a copolymer selected from the group consisting of maleic acid-modified polypropylene resins or a resin mixture of said copolymer and a polypropylene resin, and
the polypropylene film being stretched at least in one direction.

2. The polypropylene film according to claim 1, wherein the surface layer (B) comprises the resin mixture that contains at least 5 % by weight of the maleic acid-modified polypropylene resins.

## Patentansprüche

1. Polypropylenfolie mit einer Lichtdurchlässigkeit (JIS-K-6714) von 40% oder weniger, die eine Grundschicht (A) und eine Oberflächenschicht (B), die auf wenigstens eine Oberfläche der Grundschicht (A) laminiert ist, aufweist; wobei
die Grundschicht (A) ein Polypropylenharz umfasst und einen Hohlraumgehalt von 0,2 cm³/100 g bis 30 cm³/100 g hat;
die Oberflächenschicht (B) ein Copolymer umfasst, das aus der Gruppe ausgewählt ist, die aus Maleinsäure-modifizierten Polypropylenharzen oder einem Harzgemisch aus dem Copolymer und einem Polypropylenharz besteht; und
die Polypropylenfolie in wenigstens einer Richtung gestreckt ist.

2. Polypropylenfolie gemäß Anspruch 1, wobei die Oberflächenschicht (B) ein Harzgemisch umfasst, das wenigstens 5 Gew.-% der Maleinsäure-modifizierten Polypropylenharze umfasst.

## Revendications

1. Film de polypropylène ayant une transmission de lumière (JIS-K-6714) de 40 % ou moins et ayant une couche de base (A) et une couche de surface (B) stratifiée sur au moins une surface de la couche de base (A), dans lequel
la couche de base (A) comprend une résine de polypropylène et présente des cavités en une teneur en cavités allant de 0,2 cm³/100 g à 30 cm³/100 g
la couche de surface (B) comprend un copolymère choisi dans le groupe constitué par des résines de polypropylène modifiées par l'acide maléique ou par un mélange de résines dudit copolymère et d'une résine de polypropylène, et
le film de polypropylène étant étiré au moins dans une direction.

2. Film de polypropylène selon la revendication 1, dans lequel la couche de surface (B) comprend le mélange de résines qui contient au moins 5 % en poids des résines de polypropylène modifiées par l'acide maléique.
